# DEMANDE DE BREVET EUROPEEN

(11) **EP 1 310 730 A1**
(43) Date de publication de la demande: **14.05.2003**
(21) Numéro de dépôt: 02079043.2
(22) Date de dépôt: 01.10.2002
(51) Int. Cl.: F21V 21/04

(54) **Support de fixation, notamment pour un luminaire encastré**

(30) Priorité: 09.10.2001 FR 0112980
(71) Demandeur: Koninklijke Philips Electronics N.V., 5621 BA Eindhoven (NL)
(72) Inventeur: Vernusset, Jean-François, 75008 Paris (FR); Segret, Henribert, 75008 Paris (FR); Faye, Nicolas, 75008 Paris (FR)
(74) Mandataire: Lottin, Claudine

(57) **Abrégé**

La présente invention concerne un support de fixation (10) comprenant une patte de blocage (5), un puits vertical non plein (4) et une collerette (3). Il est caractérisé en ce qu'il est associé à une tige (6) apte à déverrouiller la patte de blocage d'une position verrouillée, une zone d'appui et de guidage (8) de la patte de blocage (5), et un ressort (7) apte à exercer une pression sur ladite patte (5) de telle sorte que lorsque cette dernière est en position déverrouillée, guidée par la zone d'appui et de guidage (8) et par l'élément vertical (4), elle vient exercer une pression sur un faux-plafond (12).

## Description

La présente invention concerne un appareil d'éclairage encastrable comprenant un support de fixation comportant une collerette, une patte de blocage et un élément vertical, la patte étant apte à être déplacée d'une position verrouillée vers une position déverrouillée.
Elle trouve une application particulière notamment pour les luminaires encastrés dans un faux plafond.

Le brevet japonais 10289615 décrit un luminaire comprenant :
- une patte apte à être déplacée d'une position verrouillée vers une position déverrouillée, la patte étant calée sur un élément vertical,
- une vis incluse dans ledit élément vertical,
- une première collerette, et
- une deuxième collerette.
Afin d'encastrer et de maintenir le luminaire dans un faux-plafond, on effectue les étapes suivantes. On introduit le luminaire dans un orifice situé dans le faux-plafond. On fait tourner la vis de 90° avec un tournevis afin de débloquer la patte de sa position verrouillée vers sa position déverrouillée. Par la suite, on dévisse la vis afin de faire descendre la patte, la patte étant guidée par l'élément vertical. On dévisse complètement jusqu'à ce que la patte arrive en butée sur la première collerette. La patte appuie sur la première collerette. Le faux plafond est alors pris entre la première collerette qui se trouve à l'intérieur du faux-plafond et la deuxième collerette qui se trouve à l'extérieur du faux-plafond. Le luminaire est ainsi fixé.
L'inconvénient majeur d'un tel luminaire réside dans le fait qu'il faut trop d'efforts et de temps pour installer un luminaire. En effet, il faut notamment dévisser complètement la vis.

Aussi un problème technique à résoudre par la présente invention est de proposer un appareil d'éclairage encastrable comprenant un support de fixation, le support comportant une collerette, une patte de blocage, et un élément vertical, ladite patte étant apte à être déplacée d'une position verrouillée vers une position déverrouillée, ainsi qu'un tel support de fixation, qui permettent d'installer un tel appareil rapidement et sans trop d'efforts.
Une solution au problème technique posé se caractérise en ce que l'appareil d'éclairage comporte une tige apte à déverrouiller ladite patte de blocage de sa position verrouillée, une zone d'appui et de guidage de la patte de blocage, et un ressort apte à exercer une pression sur ladite patte de blocage lorsque cette dernière est en position déverrouillée de telle sorte que la patte, guidée par la zone d'appui et de guidage et par l'élément vertical, vient exercer une pression sur un faux-plafond.
Selon un second objet de la présente invention, cette solution se caractérise, en ce que le support de fixation comporte une zone d'appui et de guidage et est associé à une tige apte à déverrouiller la patte de blocage de sa position verrouillée et à un ressort apte à exercer une pression sur ladite patte de blocage de telle sorte que lorsque cette dernière est en position déverrouillée, guidée par la zone d'appui et de guidage et par l'élément vertical, elle vient exercer une pression sur un faux-plafond.

Ainsi, comme on le verra en détail plus loin, la tige permet de pousser sans efforts sur la patte de blocage pour la déverrouiller. Par la suite, ladite patte vient se plaquer automatiquement sur le faux-plafond grâce au ressort qui exerce une pression sur la patte. En conséquence, ledit faux-plafond se trouve maintenu entre ladite patte et la collerette. L'appareil d'éclairage est fixé.

La description qui suit, en regard des dessins annexés, le tout donné à titre d'exemples non limitatifs, fera bien comprendre en quoi consiste l'invention.
- la Fig. 1 est une vue globale d'un appareil d'éclairage selon l'invention,
- la Fig. 2 est une première représentation partielle d'un appareil d'éclairage de la figure 1,
- la Fig. 3 illustre une tige, élément de l'appareil d'éclairage de la figure 1,
- la Fig. 4 illustre un ressort et une patte, éléments de l'appareil d'éclairage de la figure 1,
- la Fig. 5 est une deuxième représentation partielle de l'appareil d'éclairage selon l'invention lorsqu'il n'est pas fixé sur un faux-plafond,
- la Fig. 6 est une troisième représentation partielle de l'appareil d'éclairage selon l'invention en position intermédiaire,
- la Fig. 7 est une quatrième représentation partielle de l'appareil d'éclairage selon l'invention lorsqu'il est fixé sur un faux-plafond,
- la Fig. 8 est une cinquième représentation partielle de l'appareil d'éclairage selon l'invention en position de maintien sur un faux-plafond.
Le présent exposé de l'invention a trait à un exemple de luminaire encastrable dans un faux-plafond.

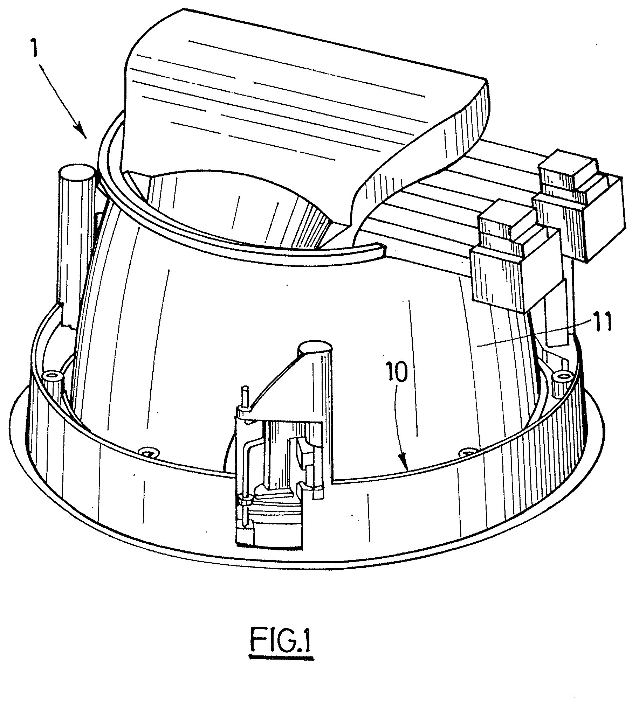

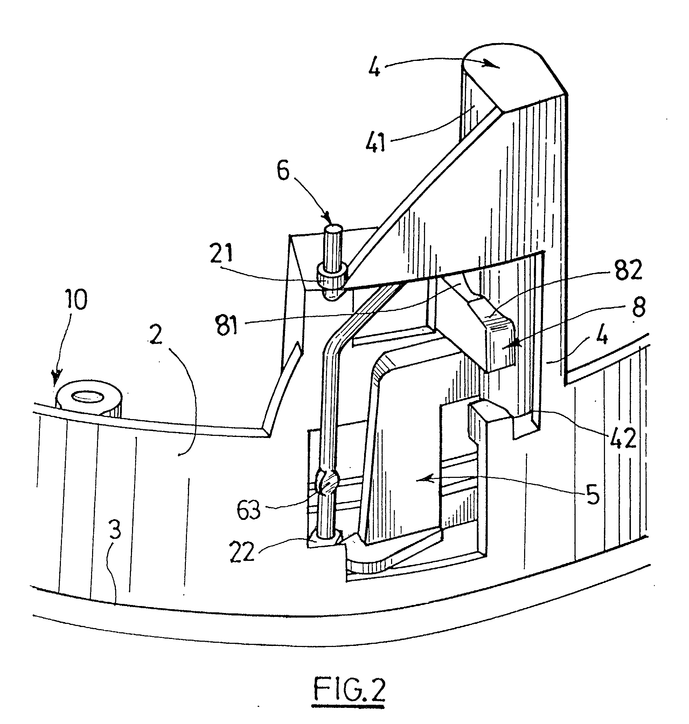

Tel que représenté sur la figure 1, le luminaire 1 comprend un réflecteur 11 monté sur un support de fixation 10 de préférence amovible. Le montage du réflecteur 11 sur le support 10 est réalisé de manière connue de l'homme du métier et n'est donc pas décrit ici. Comme le montre la figure 2, le support de fixation 10 est de préférence cylindrique et comporte :
- une embase 2,
- une collerette 3,
- une patte de blocage 5,
- un élément vertical 4,
- une zone d'appui et de guidage 8 comprenant une première sous-zone horizontale d'appui 81 et une deuxième sous-zone pentue de guidage 82,
- des moyens de maintien 21 d'une tige, et,
- des moyens de fixation 22 d'une tige.

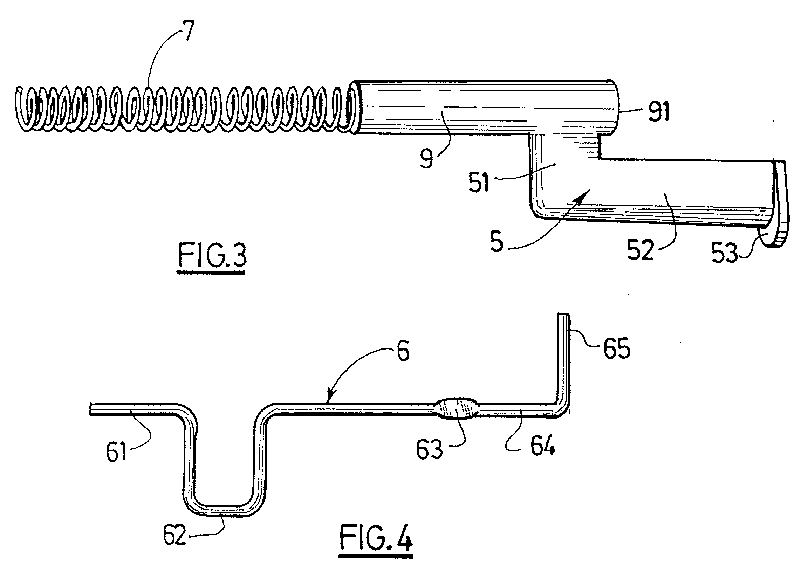

La collerette 3 est fabriquée de préférence dans un matériau plastique ou métallique. Elle sert d'interface entre l'appareil d'éclairage 1 et le faux-plafond.
La patte de blocage 5 est représentée à la figure 3. Elle est fabriquée de préférence dans un matériau plastique ou métallique. Elle comprend une partie horizontale 51 reliée à une partie verticale 52, elle-même reliée à un appui 53. Les trois éléments cités forment de préférence un ensemble solidaire et sont moulés ensemble. La patte de blocage 5 permet d'appuyer sur le faux-plafond.
L'élément vertical 4 est préférentiellement un puits non plein comprenant un logement 41 et une fente 42. Ledit élément vertical 4 est fixé sur la collerette 3 qui le maintient. Il est fabriqué de préférence dans un matériau plastique ou métallique. Il permet de guider verticalement la patte de blocage 5 au moyen de sa fente 42. Il permet également d'accueillir un ressort 7 dans son logement 41 et de le maintenir verticalement.
Le ressort 7 est préférentiellement en acier. Il est représenté à la figure 3. Il permet de pousser sur la patte de blocage 5. Il est relié à la patte 5 par l'intermédiaire d'un bossage de centrage 9. Le ressort 7 est préférentiellement inséré dans ledit bossage 9.
Ledit bossage de centrage 9 comprend une empreinte 91 apte à accueillir un outil tel qu'une tête de tournevis. Préférentiellement, le bossage de centrage 9 est moulé également avec les autres éléments de la patte 5.
La zone d'appui et de guidage 8 du support de fixation 10 est fabriquée de préférence dans un matériau plastique ou métallique. La première sous-zone horizontale d'appui 81 permet de maintenir la patte de blocage 5 dans une position verrouillée, tandis qu'une deuxième sous-zone pentue de guidage 82 permet d'amorcer et d'entraîner un déplacement de la patte de blocage 5 et de la guider lorsqu'elle est en position déverrouillée.

Le luminaire 1 comprend également une tige 6. La tige 6 est de préférence fabriquée dans un matériau métallique. Elle possède par exemple un diamètre de 3mm. Elle est représentée sur la figure 4. Elle comporte une partie supérieure verticale 61, une cambrure 62, un plat 63, une partie inférieure verticale 64 et un manchon 65 préférentiellement perpendiculaire à la partie inférieure 64. La tige 6 permet de déplacer la patte de blocage 5.

Préférentiellement, la collerette 3, le puits non plein vertical 4 et la zone d'appui 8 forment un seul ensemble solidaire avec l'embase 2 du support de fixation 10 et sont tous moulés ensemble. Cela présente l'avantage de diminuer le coût de l'appareil d'éclairage : on n'utilise aucun moyen de fixation entre ses éléments. De plus, cela présente l'avantage d'avoir, regroupés dans une seule masse, différentes fonctions correspondant à la collerette 3, au puits non plein vertical 4, à la zone d'appui 8 et à l'embase 2 du support de fixation 10. Cette masse pourra être réutilisée en association avec la tige 6 et le ressort 7 dans d'autres applications telles qu'une application de baffles nécessitant une fixation de haut-parleurs sur un support de fixation amovible, le haut-parleur remplaçant dans ce cas le réflecteur 11.

Afin de fixer le luminaire 1 dans le faux-plafond, on effectue les étapes suivantes.
Dans une première étape, la tige 6 est introduite dans le support de fixation 10 verticalement. Elle est maintenue à la verticale par ledit support 10 grâce aux moyens de maintien 21 qui sont ici un bossage haut creux et grâce aux moyens de fixation 22 qui sont par exemple un clip situé en bas de l'embase 2. La partie supérieure 61 de la tige est insérée dans le bossage haut 21 dont le diamètre est sensiblement supérieur à celui de la tige 6, ledit bossage permettant de maintenir la tige 6. La partie inférieure 64 de la tige est insérée dans le clip 22 dont le diamètre est sensiblement supérieur à celui de la tige 6, ledit clip évitant à la tige d'avoir du jeu, c'est un montage serré. Par la suite, on pousse verticalement vers le haut la tige 6 pour la ranger.
Le manchon 65 de la tige 6 est plaqué contre l'embase 2 du support de fixation 10. Il se trouve au-dessus de la collerette 3 à l'intérieur de ladite embase 2.

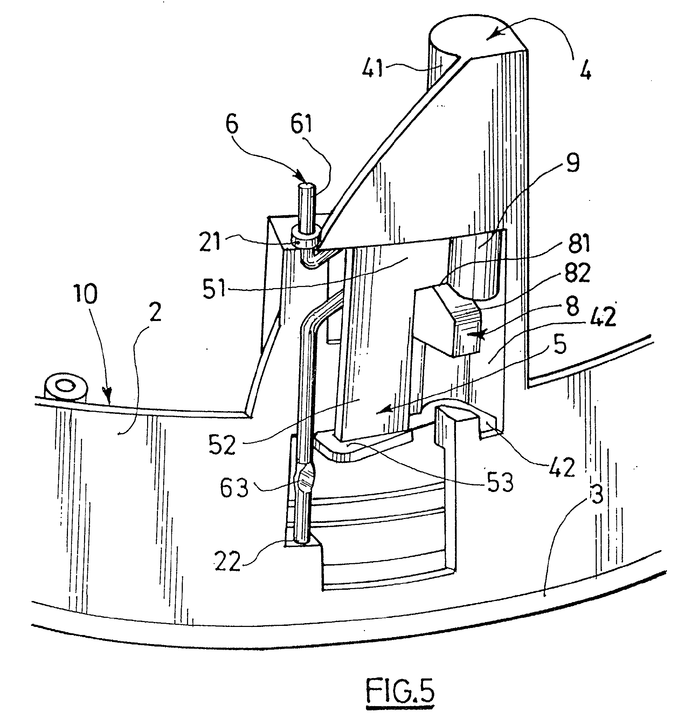

Dans une deuxième étape, on verrouille la patte de blocage 5 en la mettant en position verrouillée. Comme le montre la figure 5, dans cette position verrouillée, la partie horizontale 51 de la patte 5 est calée sur la sous-zone d'appui horizontale 81 de la zone d'appui et de guidage 8, et ladite patte 5 est rentrée à l'intérieur de l'embase 2 du support de fixation 10. La cambrure 62 de la tige 6 est placée derrière la partie verticale 52 de la patte 5. Le ressort 7 est comprimé et se trouve dans le logement 41 du puits non plein 4 ainsi que le bossage de centrage 9.

Dans une troisième étape, on encastre le luminaire 1 dans un orifice (non représenté) de forme adaptée, réalisé dans le faux-plafond, la collerette 3 restant à l'extérieur du faux-plafond.

Dans une quatrième étape, on prend le manchon 65 de la tige 6 de préférence à la main, et on tire la tige 6 verticalement vers le bas d'environ 10mm, le bossage haut 21 permettant de guider verticalement la tige 6. Le plat 63 bute contre le clip 22 qui arrête la tige 6 en translation et l'empêche ainsi d'aller plus bas. Le manchon 65 sort alors de l'embase 2 vers le bas et se retrouve à un niveau inférieur à la collerette 3. Cela va permettre de manipuler la tige 6.

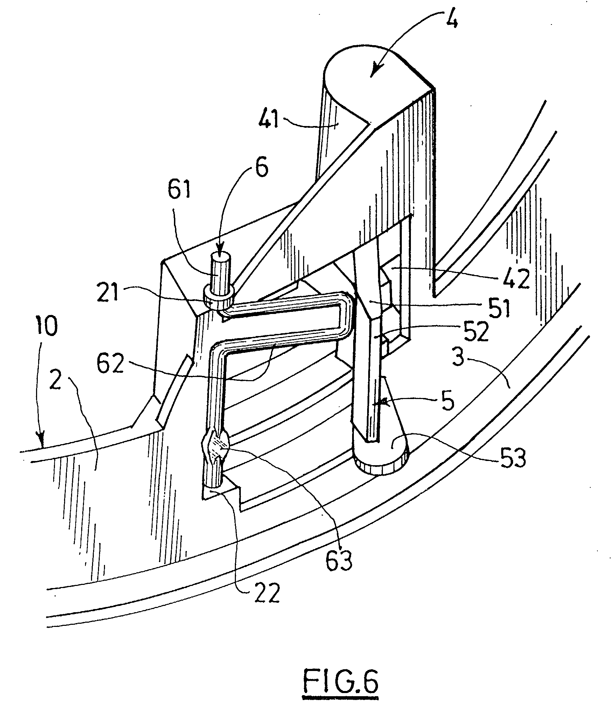

Dans une cinquième étape, représentée à la figure 6, on tourne le manchon 65 vers l'intérieur de l'embase 2 de sorte qu'un effort de poussée selon un axe longitudinal est appliqué à la tige 6 qui effectue une rotation. En conséquence, la cambrure 62 de la tige 6 effectue une rotation vers l'extérieur de ladite embase 2 et pousse la partie horizontale 51 et la partie verticale 52 de la patte de blocage 5. Le fait de tourner le manchon 65 d'environ 90° déverrouille la patte de blocage 5 qui se déplace en translation sur la sous-zone horizontale d'appui 81 jusqu'à s'engager sur la sous-zone pentue de guidage 82 tout en effectuant une rotation par rapport à un axe vertical du bossage de centrage 9. La patte de blocage 5 est alors dans une position intermédiaire. La partie horizontale haute 51 et la partie verticale basse 52 ainsi que l'appui 53 de la patte de blocage 5 se retrouvent de ce fait à l'extérieur de l'embase 2.

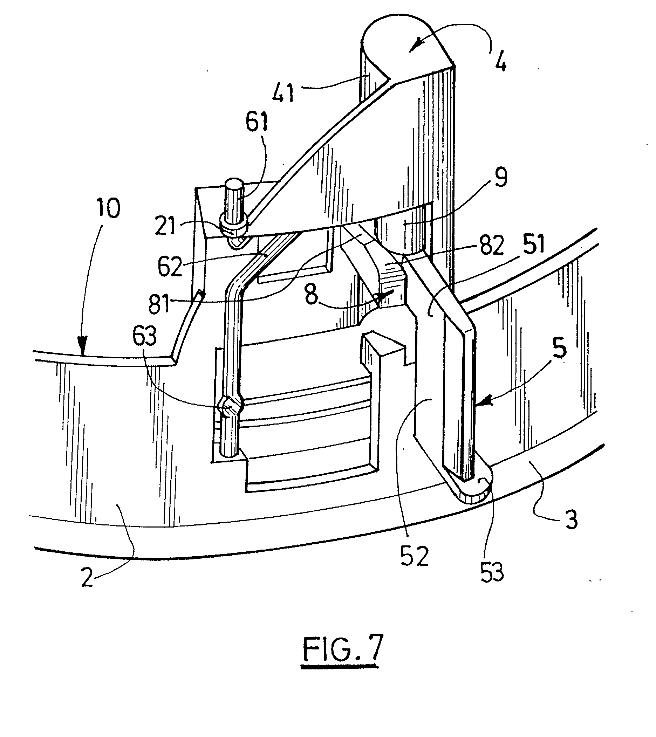

Dans une sixième étape, le ressort 7 qui exerce une pression permanente sur la patte de blocage 5 au moyen du bossage de centrage 9, fait glisser la patte de blocage 5 sur la sous-zone pentue de guidage 82. Ladite sous-zone pentue de guidage 82 amorce et entraîne alors le déplacement de ladite patte vers le bas. Cette sous-zone pentue de guidage 82 a pour avantage de déverrouiller plus rapidement la patte de blocage 5.
Cette dernière glisse alors le long de la fente 42 du puits 4 qui permet de maintenir ladite patte 5 perpendiculairement au faux-plafond, comme le montre la figure 7. Par suite, la patte de blocage 5 termine sa course sur le faux-plafond 12.
Ainsi, la patte de blocage 5 est complètement déverrouillée et son appui 53 est plaqué sur le faux-plafond. Ladite patte 5 exerce ainsi une pression sur le faux plafond 12 de sorte que ce dernier est maintenu entre la collerette 3 et la patte de blocage 5 comme le montre la figure 8. La collerette permet une tenue de l'ensemble du luminaire 1 contre le faux-plafond.

Dans une dernière étape, soit, on range la tige 6 en la poussant verticalement vers le haut et en effectuant de nouveau une rotation de 90° en sens inverse au moyen du manchon 65, le manchon 65 de la tige 6 étant de nouveau plaqué contre l'embase 2, soit, on retire la tige 6 en la tirant verticalement au moyen du manchon 65 pour faire sortir sa partie supérieure 61 du bossage haut 21 puis en tirant dessus transversalement pour la faire sortir du clip 22.

On notera que la sous-zone pentue de guidage 82 a un avantage supplémentaire qui est d'éviter d'avoir une cambrure 62 de la tige 6 trop longue horizontalement. En effet, dans le cas où cette sous-zone 82 serait verticale, il faudrait une cambrure 62 plus longue pour amorcer la descente de la patte de blocage 5 et la cambrure 62 risquerait fort de se retrouver coincée derrière la zone d'appui et de guidage 8.

Pour désinstaller le luminaire 1, par exemple lorsqu'il faut changer un composant tel qu'une douille ou un ballast dudit luminaire, on insère un outil tel qu'un tournevis dans la partie inférieure du puits non plein 4 du support de fixation 10 et on place la tête de cet outil dans l'empreinte 91 du bossage de centrage 9 qui est relié à la patte de blocage 5 et au ressort 7. A l'aide du tournevis, on exerce un effort de pression sur le ressort 7 par l'intermédiaire du bossage de centrage 9 en appuyant sur ledit bossage 9. On pousse vers le haut jusqu'à ce que l'emprunte 91 du bossage de centrage 9 se trouve au niveau de la sous-zone horizontale d'appui 81. Par la suite, on tourne de 90° la patte de blocage 5 vers l'intérieur de l'embase 2 pour la réarmer. On verrouille alors ladite patte de blocage 5 en la plaçant sur la sous-zone horizontale d'appui 81.
Le ressort 7 est ainsi réarmé grâce au bossage de centrage 9 et l'on peut sans problèmes désinstaller le luminaire 1 du faux-plafond 12 sans détériorer ce dernier ou une partie du luminaire 1 ou encore une partie de son support 10. On pourra également réinstaller sans dommages ledit luminaire 1 comme décrit auparavant.

Bien entendu, le cadre de l'invention n'est nullement limité aux modes de réalisation décrits ci-dessus et des variations ou modifications peuvent y être apportés sans pour autant s'écarter de l'esprit et de la portée de l'invention. L'objet de l'invention s'étend, par exemple, à d'autres modes de réalisation dans lesquels, par exemple, d'autres formes pour l'élément vertical 4 sont utilisées ou d'autres matériaux sont utilisés.

Bien entendu, le support de fixation, objet de l'invention, n'est nullement limité à l'application décrite ci-dessus, et s'étend, par exemple, à d'autres applications telles que des baffles de hauts-parleurs.

Aucun signe de référence dans le présent texte ne doit être interprété comme limitant ledit texte.
Le verbe "comprendre" et ses conjugaisons ne doivent également pas être interprétés de façon limitative, i.e. ils ne doivent pas être interprétés comme excluant la présence d'autres étapes ou éléments outre ceux définis dans la description, ou encore, comme excluant une pluralité d'étapes ou d'éléments déjà listés après ledit verbe et précédés de l'article "un" ou "une".

## Revendications

1. Appareil d'éclairage encastrable (1) comprenant un support de fixation (10), le support comportant une collerette (3), une patte de blocage (5), et un élément vertical (4), ladite patte (5) étant apte à être déplacée d'une position verrouillée vers une position déverrouillée, **caractérisé en ce qu'**il comporte une tige (6) apte à déverrouiller la patte de blocage (5) de sa position verrouillée, une zone d'appui et de guidage (8) de la patte de blocage (5), et un ressort (7) apte à exercer une pression sur ladite patte de blocage (5) de telle sorte que lorsque cette dernière est en position déverrouillée, guidée par la zone d'appui et de guidage (8) et par l'élément vertical (4), elle vient exercer une pression sur un faux-plafond (12).

2. Appareil d'éclairage encastrable (1) selon la revendication 1, **caractérisé en ce que** la zone d'appui et de guidage (8) comprend une sous-zone horizontale d'appui (81) et une sous-zone pentue de guidage (82) respectivement aptes à maintenir la patte de blocage (5) en position verrouillée et à guider la patte de blocage (5) lorsqu'elle est en position déverrouillée.

3. Appareil d'éclairage encastrable (1) comportant en outre une embase (2) selon la revendication 1, **caractérisé en ce que** la collerette (3), l'élément vertical (4) et la zone d'appui (8) forment un ensemble solidaire avec ladite embase (2).

4. Appareil d'éclairage encastrable (1) selon la revendication 1, caractérisé en ce la tige (6) comporte une cambrure (62) apte à pousser la patte de blocage (5).

5. Appareil d'éclairage encastrable (1) selon la revendication 1, **caractérisé en ce qu'**il comporte en outre un bossage de centrage (9) reliant la patte (5) à un ressort (7), ledit bossage (9) permettant un réarmement dudit ressort (7).

6. Support de fixation (10) comportant une collerette (3), une patte de blocage (5), et un élément vertical (4), la patte (5) étant apte à être déplacée d'une position verrouillée vers une position déverrouillée, **caractérisé en ce qu'**il comporte une zone d'appui et de guidage de la patte de blocage (5), et **en ce qu'**il est associé à une tige (6) apte à déverrouiller la patte de blocage (5) de sa position verrouillée et à un ressort (7) apte à exercer une pression sur ladite patte de blocage (5) de telle sorte que lorsque cette dernière est en position déverrouillée, guidée par la zone d'appui et de guidage (8) et par l'élément vertical (4), elle vient exercer une pression sur un faux-plafond (12).

7. Support de fixation (10) selon la revendication 6, **caractérisé en ce que** la zone d'appui et de guidage (8) comprend une sous-zone horizontale d'appui (81) et une sous-zone pentue de guidage (82) respectivement aptes à maintenir la patte de blocage (5) en position verrouillée et à guider la patte de blocage (5) lorsqu'elle est en position déverrouillée.

8. Support de fixation (10) comportant en outre une embase (2) selon la revendication 6, caractérisé en ce la collerette (3), l'élément vertical (4) et la zone d'appui (8) forment un ensemble solidaire avec ladite embase (2).

9. Support de fixation (10) selon la revendication 6, **caractérisé en ce qu'**il comprend en outre un bossage de centrage (9) reliant la patte (5) à un ressort (7), ledit bossage (9) permettant un réarmement dudit ressort (7).
